# EUROPEAN PATENT SPECIFICATION

(11) **EP 0 432 578 B1**
(45) Date of publication and mention of the grant of the patent: **07.02.1996**
(21) Application number: 90122749.6
(22) Date of filing: 28.11.1990
(51) Int. Cl.: B27D 1/04, B27D 1/00, B27G 11/00, C09J 5/00, B32B 21/13

(54) **Method for bonding wood materials**
Verfahren zum Leimen von Holzwerkstoffen
Procédé de collage de matériaux en bois

(30) Priority: 14.12.1989 JP 324394/89
(43) Date of publication of application: 19.06.1991
(73) Proprietor: Meinan Machinery Works, Inc., Ohbushi Aichi pref. 474 (JP)
(72) Inventor: Hasegawa, Katsuji, Ohbu-shi, Aichi-pref. (JP)
(74) Representative: Tiedtke, Harro, Dipl.-Ing.

(56) References cited:
- WO-A-88/02016
- GB-A- 716 347
- GB-A- 2 179 592
- US-A- 3 003 205

## Description

### FIELD OF THE INVENTION

This invention relates to a method for bonding wood plies, such as particle board, veneers, and laminates according to the preamble of claim 1, and particularly to a method for bonding wood materials which are relatively thin, compared with their width or length.

Products such as plywood, laminated veneer lumbers or laminated wood are produced by bonding wood plies together with a thermosetting adhesive material. Heat is applied to the wood plies to harden the thermosetting adhesive material. Since the hardening of the adhesive material bonds the wood plies together, the step of applying heat to the wood plies is important.

The GB-A-716 347 discloses a generic method for bonding wood plies in which a clamped assembly is immersed into impregnating oil to heat the thermosetting adhesive material. The impregnating oil that has entered the grooves and has been reduced in temperature is replaced by hot impregnating oil only by natural convection. Therefore, the replacement with hot impregnating oil progresses very slowly. Furthermore, is is necessary to use an adhesive material that does not lose its adhesive property in a liquid, and such an adhesive material is expensive.

The conventional methods for bonding wood plies may be divided into two major types, according to the manner in which the heat is applied to the wood plies. The first employs heating plates which also serve as pressing plates. The second employs a high-frequency heating apparatus. According to the first bonding method which employs heating plates, wood plies are placed on one another with a thermosetting adhesive material between each ply. The layered plies are placed between the upper and lower heating plates, and are simultaneously heated by the heating plates (which are heated in advance), while the wood plies are pressed together by the heating plates. One advantage of this bonding method is that it does not require a complicated apparatus. In addition, it is inexpensive. However, with this bonding method, the adhesive material between the wood plies nearer the middle of the stack takes longer to heat or harden than the adhesive materials between the outer plies.

According to the second bonding method, which employs a high-frequency heating apparatus, wood plies placed on one another with an adhesive material between are heated by the high-frequency heating apparatus while the wood plies are being pressed together. With this bonding method, the adhesive material nearer the middle of the thickness of the stack of wood plies than the other adhesive materials therein does not take considerably longer to heat or harden than the other adhesive materials. However, this bonding method requires a complicated apparatus. Also, it is costly to use this bonding method.

In JP-A-49-43133 the applicant proposed a third method for bonding wood plies, exclusively designed for veneer sheets, to eliminate the foregoing drawbacks of the conventional bonding methods. According to this bonding method, at least one of the veneer sheets to be bonded together is first "tenderized" to produce cracks therein. Then, the veneer sheets (with an adhesive material between) are pressed together with pressing plates while hot air is supplied from the edges of the veneer sheets into the cracks therein. The pressing plates are not used as heating plates and are not heated to set the adhesive material between the veneer sheets. Instead, the hot air supplied into the cracks hardens the adhesive material. However, the cracks produced by "tenderizing" the veneer sheets are small, and most are not in communication with other cracks. Hence, the hot air supplied from the edges of the veneer sheets does not reach the inner or central portions of the veneer sheets, so that it may take a very long time for the adhesive material to harden.

More importantly, there is an unavoidable disadvantage common to the foregoing three conventional bonding methods. With either of the first two bonding methods, the whole of the wood plies (to be bonded) is heated to set the adhesive material. It is also the case with the third method if in the third method all veneer sheets to be bonded together are tenderized. Because the moisture contained in the wood plies and the solvent (water in most cases) contained in the adhesive material is vaporized or heated to a very high temperature when either of these methods is employed, the wood plies are softened. Accordingly, when a pressure is applied to the wood plies by the pressing plates, the plates tend to "crush" the wood plies and reduce the thickness of the whole of the bonded wood.

It is an object of the present invention to further develop a method for bonding wood plies according to the preamble of claim 1 so that a secure adhesion is ensured.

This object is achieved by the features indicated in the characterizing portion of claim 1.

Advantageous further developments are set out in the dependent claims.

According to the invention, heat fluid passages are formed in at least one face of at least one wood ply. The passages should preferably be evenly distributed in the surface of the wood. Each passage extends from one edge of the wood ply to a second edge thereof. Then, the wood plies are placed on one another with a thermosetting adhesive material or materials between. The wood plies are pressed together while a heating fluid is blown into the passages to heat and harden the thermosetting adhesive. As used herein, the heating fluid is a hot vapor or a hot gas, e.g., steam or hot air.

According to one further development of the invention, the heat fluid passages extend from one edge of the wood ply to an opposed edge thereof.

According to another further development of the invention, a first group of passages extends from a first edge of the wood ply to a second, opposed edge thereof, while a second group of passages extends from a third edge of the wood ply to a fourth edge, opposite the third edge.

According to still another further development of the invention, a first group of passages extends from one edge of the wood ply to an opposed edge thereof, while a second group of passages diagonally intersects the first group.
Fig. 1 is a partly-broken perspective view of two wood plies placed on each other with an adhesive material between. One of the wood plies is provided with heating fluid passages of the invention into which a heating fluid is provided to heat and harden the adhesive material;
Fig. 2 is an enlarged view of a portion of the wood plies of Fig. 1 indicated by the letter A;
Fig. 3 is a partly-broken perspective view of wood plies placed on one another with adhesive materials between. Some of the wood plies are provided with passages;
Fig. 4 is an enlarged view of a portion of the wood plies of Fig. 3 indicated by the letter B;
Fig. 5 is also a partly-broken perspective view of wood plies placed on one another with adhesive materials between. All the wood plies are provided with passages;
Fig. 6 is an enlarged view of a portion of the wood plies of Fig. 5 indicated by the letter C;
Fig. 7 shows wood plies between upper and lower pressing and conveying mechanisms such that the fibers of the wood plies extend along the direction of conveyance. In Fig. 7 the wood plies are simultaneously pressed and conveyed by the mechanisms as shown;
Fig. 8 shows wood plies between upper and lower pressing plates and aligned such that the fibers extend in the direction of conveyance. In Fig. 8 the wood plies are being pressed by the pressing plates. The wood plies are intermittently conveyed;
Fig. 9 is a plan view of a wood ply having in its surface a first group of passages extending in one direction and a second group of passages extending perpendicular to the first group;
Fig. 10 is a plan view of a wood ply having in its surface a first group of passages extending in one direction and a second group of passages extending diagonally across the first group of passages;
Fig. 11 shows a possible mode of the bonding method of the invention; and
Fig. 12 shows a hot steam blower which may be used for the bonding method of the invention.

Bonding methods according to the invention will now be described with reference to the figures of the drawing, wherein like reference numerals indicate corresponding parts.

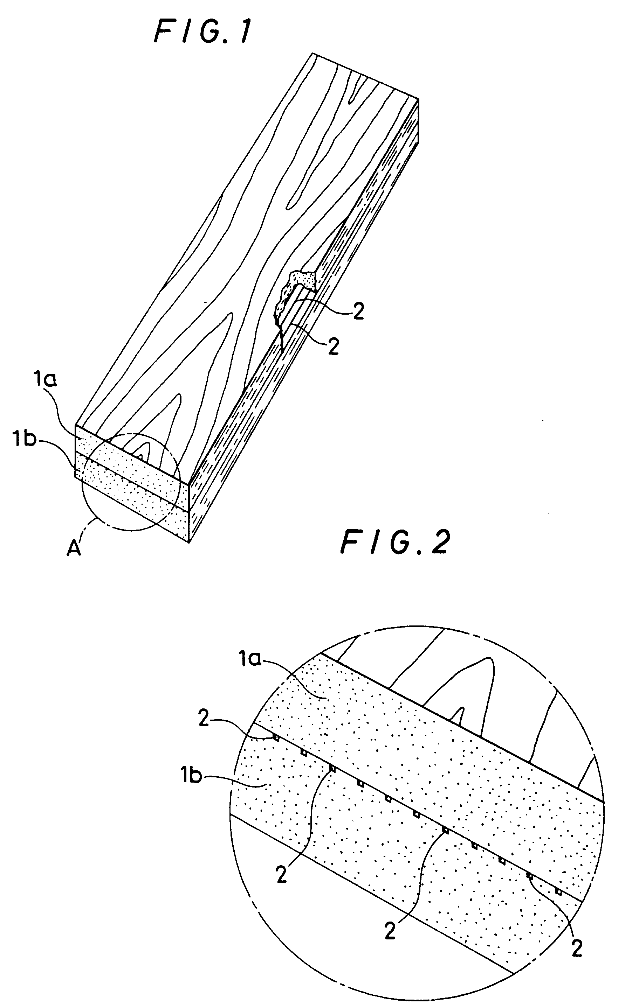

In Fig. 1 a wood ply 1a is placed on a wood ply 1b with a thermosetting adhesive material between. As illustrated in Fig. 2, the lower wood ply 1b is provided, on its upper face, with plural heating fluid passages 2 extending along the direction of the fibers of the wood ply 1b. Although not wholly shown, the heating fluid passages 2 extend from one edge of the wood ply 1b to the opposite edge thereof. Passages 2 are formed in the wood ply 1b before wood ply 1a is placed on wood ply 1b.

When the wood plies 1a and 1b of Fig. 1 are pressed together by pressing elements (not shown) such as pressing plates, a heating fluid (not shown), such as steam or hot air, is supplied or blown into the passages 2 from one end of the passages 2. The heating fluid supplied into the passages 2 heats and hardens the thermosetting adhesive material between wood plies 1a and 1b causing wood plies 1a and 1b to bond together. Needless to say, the portions of the adhesive material which are located directly on passages 2 are directly heated by the heating fluid, while the other portions adjacent to the heating fluid passages 2 are heated indirectly.

To ensure adequate heat transfer across the interface between the plies, the heating fluid passages are narrow in diameter, relative to their strength. The diameter of the passages must be great enough to allow for adequate heat transfer without supplying the heating fluid at prohibitively high pressure. The diameter should also be narrow enough not to weaken the plies. The precise diameter of the passages will depend on the thickness of the ply and the width or length of the ply, and will be calculated according to the characteristics of the specific wood materials to be bonded.

Thus, according to this bonding method, heating the pressing elements is unnecessary. The pressing elements are only used as such.

### Comparative Example I

On one face of a wood ply with a thickness of 30 millimeters heating fluid passages extending from edge to edge along the direction of the fibers of the wood ply are formed. The passages are spaced 6 millimeters apart from one another and each has a square vertical cross section with a width of 0.7 millimeter and a depth of 0.7 millimeter. The wood ply is bonded to another wood ply of the same thickness using a thermosetting adhesive material between the plies (as depicted in Fig. 1) while steam is provided into the passages at a pressure of 5 atmospheres by means of a heating fluid blower (which will be describe later). Using this method, the adhesive material reached a temperature of approximately 100 degrees centigrade several tens of times faster than when the previously-mentioned conventional bonding method using heating plates is employed and several times faster than in the case where the previously-mentioned conventional bonding method using a high-frequency heating apparatus is employed.

According to this bonding method, since only a part of wood plies 1a and 1b are heated, i.e., they are heated only in their portions surrounding the passages 2, wood plies 1a and 1b are not softened and, hence, are not "crushed" under the pressure from the pressing plates. Accordingly, the whole of the wood plies 1a and 1b is virtually not reduced in its thickness.

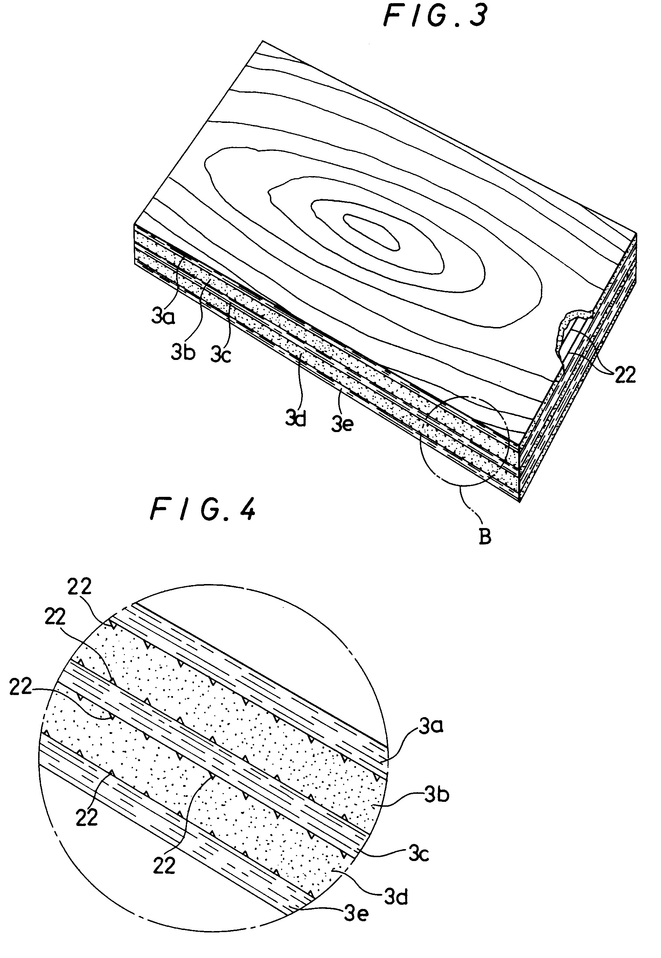

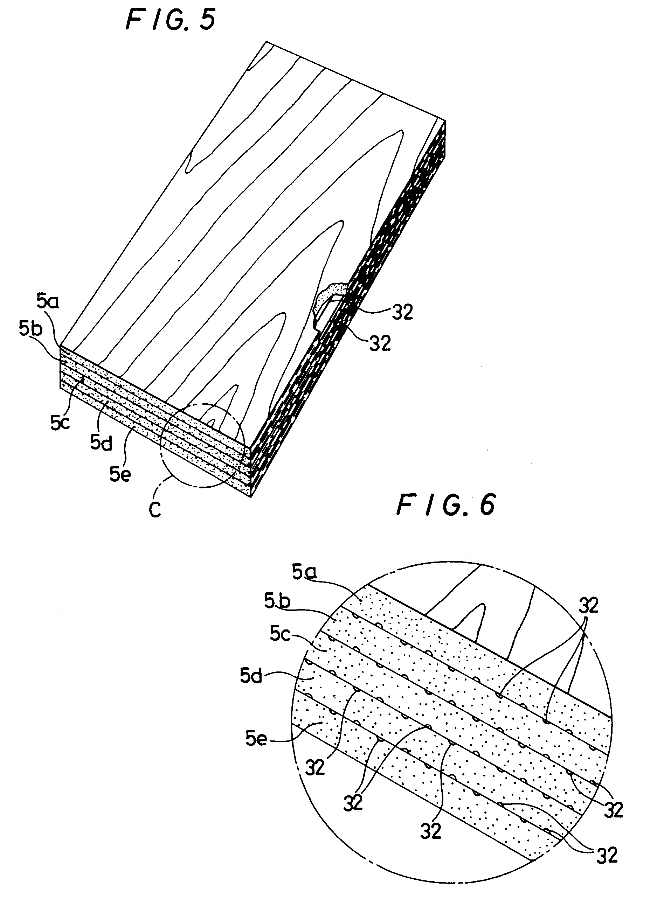

Figs. 3 and 4 depict another embodiment of the invention. In Fig. 4 five wood plies 3a to 3e are placed on one another with thermosetting adhesive materials (not shown) between. The wood plies 3a to 3e are arranged so that the fibers of the adjacent wood plies extend perpendicular to each other. Wood ply 3b is provided, in each of its upper and lower faces, with passages 22 extending from one edge of wood ply 3b to the opposite edge along the direction of the fibers. Also, wood ply 3d is provided, in each of its upper and lower faces, with passages 22 extending from one edge of wood ply 3d to the opposite edge along the direction of the fibers.

When wood plies 3a to 3e of Fig. 3 are pressed together by pressing elements (not shown) such as pressing plates, a suitable heating fluid (not shown) such as steam, hot air or other hot fluid is supplied or blown into passages 22 from one or both ends of passages 22. The heating fluid supplied into the passages 22 heats and hardens the adhesive materials between wood plies 3a to 3e to bond wood plies 3a to 3e together.

As with the first embodiment of Figs. 1 and 2, it is not necessary to heat the pressing elements in advance. The pressing elements are only used as such. Similarly, since wood plies 3a to 3e are heated only in part, i.e., only in the portion surrounding the passages 22, wood plies 3a to 3e are not softened and, hence, are not "crushed" by the pressure applied by the pressing plates. Accordingly, the whole of wood plies 3a to 3e is virtually not reduced in its thickness.

Figs. 5 and 6 depict a third embodiment of the invention. In Fig. 5 five wood plies 5a to 5e are placed on one another with thermosetting adhesive materials (not shown) between. The wood plies 5a to 5e are so placed that the fibers of all wood plies 5a to 5e extend in the same direction. The uppermost wood ply 5a is provided with passages 32 only in its lower face. The lowermost wood ply 5e is provided with passages 32 only in its upper face. Each intermediate wood ply (5b, 5c and 5d) is provided with passages 32 in both its upper and lower faces. The passages 32 of each wood ply (5a to 5e) extend from edge to edge along the direction of the fibers of the wood ply. Unlike the upper and lower passages 22 of each of the wood plies 3b and 3d of Figs. 3 and 4, the upper and lower passages 32 of each intermediate wood ply (5b, 5c and 5d) are not vertically aligned.

When wood plies 5a to 5e are pressed together by pressing elements (not shown) such as pressing plates, a suitable heating fluid (not shown) such as steam, hot air or other hot fluid is supplied or blown into the passages 32. The fluid supplied into the passages 32 heats and hardens the adhesive materials between wood plies 5a to 5e. Thus, wood plies 5a to 5e are bonded together in the same advantageous manner as in the first and second embodiments.

Each passage 2 of Figs. 1 and 2 has a square vertical cross section. Each passage 22 of Figs. 3 and 4 has a triangular vertical cross section. Each passage 32 of Figs. 5 and 6 has a semicircular vertical cross section. These shapes are only examples of those which may be used in the practice of the invention and is not intended to be limiting. The passage of the invention may have any other vertical cross section which allows passage of a sufficient amount of heating fluid to heat and harden the adhesive material.

With regard to direction, passages may be formed along the direction of the fibers of the wood ply (as in the foregoing three embodiments) or in other suitable direction, including perpendicular to the fibers of the wood ply. If passages are formed along the direction of the fibers of the wood ply, such passages may have relatively large vertical cross sections and relatively great depths since such passages make few cuts in the fibers of wood and, hence, do not substantially affect the mechanical strength of the wood ply. In contrast, if passages are formed perpendicular to the fibers of the wood ply, it is preferable to form relatively shallow passages with a relatively small vertical cross section since such perpendicular passages cut the fibers of the wood at many places and may substantially affect the mechanical strength of the wood ply if the cross section or depth of the passage is too great. Also, if passages are formed perpendicular to the fibers of the wood ply, such passages should preferably have as few angles as possible in the vertical cross section.

In addition, if passages are formed perpendicular to the fibers of the wood ply, such passages preferably should be formed in meadering, zigzag or winding lines. Such an arrangement will affect the mechanical strength of the wood ply to a lesser degree than a straight arrangement.

Furthermore, if passages are formed diagonally across the fibers of the wood ply whether in straight lines, in meandering lines or in zigzag lines, such an arrangement will also affect the mechanical strength of the wood ply to a lesser degree than the arrangement where passages intersect the fibers of the wood ply in straight lines.

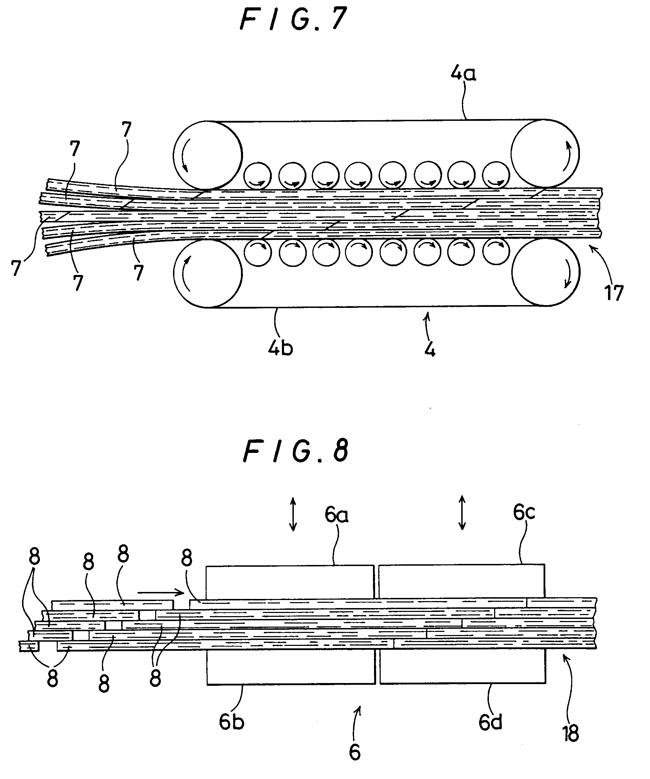

As described above, if passages are formed along the direction of the fibers of the wood ply, such passages may have relatively large vertical cross sections and relatively great depths. Such passages, however, are not suitable for a bonding operation similar to that shown in Fig. 7, where wood plies 7 are placed on one another such that the fibers of all or most of the wood plies 7 extend in the direction in which plies 7 are conveyed and pressed, and are pressed together by upper and lower pressing and conveying mechanisms 4a and 4b. Scuh passages are unsuitable because it is difficult to blow a heating fluid into the passages of the wood plies when the wood plies are passed between the pressing and conveying mechanisms. Similarly, and for the same reason, passages running in the direction of the fibers are not suitable for a bonding operation as shown in Fig. 8, which is similar to that of Fig. 7 except that in Fig. 8 wood plies 8 are intermittently pressed together by upper pressing plates 6a,6c and lower pressing plates 6b,6d while being intermittently conveyed.

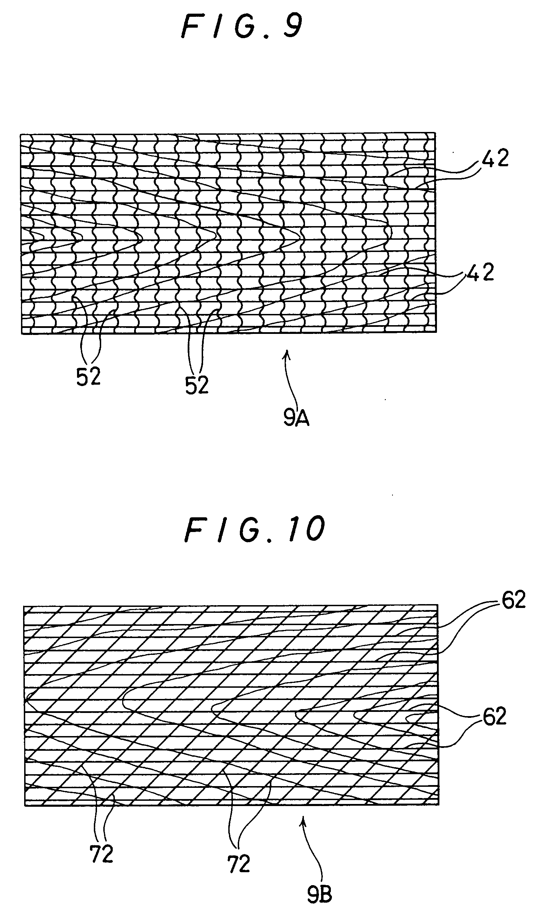

Fig. 9 depicts a different embodiment of the invention. Fig. 9 is a plan view of a wood ply 9A. The wood ply 9A is provided in its surface with two kinds of passages, i.e., passages 42 extending along the direction of the fibers of wood ply 9A and passages 52 extending perpendicular to the fibers thereof in meandering lines.

Fig. 10 depicts another different embodiment of the invention. Fig. 10 is a plan view of a wood ply 9B. The wood ply 9B is provided in its surface with two kinds of passages, i.e., passages 62 extending along the direction of the fibers of wood ply 9B and passages 72 extending diagonally across the passages 62.

Needless to say, the smaller the spaces between the passages are, the more rapidly the adhesive material hardens. In other words, the greater the number of the passages is, the more rapidly the adhesive material hardens.

With a wood ply, heat is transmitted more rapidly in the direction of the fibers than in the direction perpendicular thereto. Because of this, the passages 22 of Figs. 3 and 4 which are formed in wood ply 3b or 3d along the direction of its fibers and on which wood ply 3a, 3c or 3e is placed with its fibers extending perpendicular to the passages 22 may be separated from one another by greater distances than the passages 2 of Figs. 1 and 2 which run in wood ply 1b along the same direction as its fibers and on which wood ply 1a is placed with its fibers extending in the same direction as the passages 2 or the passages 32 of Figs. 5 and 6 which run in wood plies 5a to 5e along the same direction as the fibers.

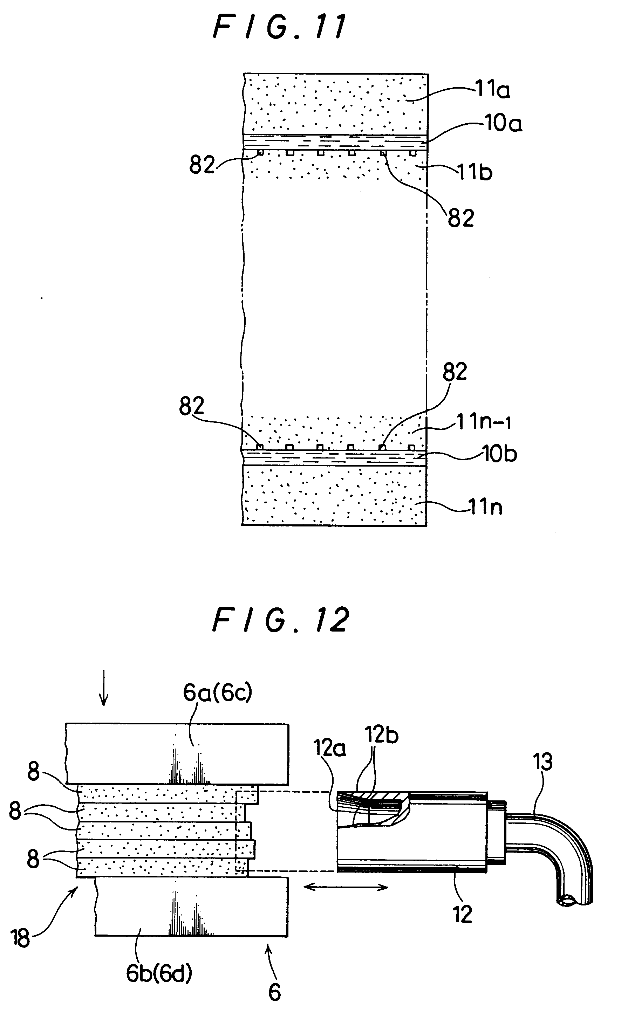

In Fig. 11 plural thick wood plies 11a to 11n are placed on one another. A thin wood ply 10a is located between the uppermost thick wood ply 11a and a second thick wood ply 11b. Also, a thin wood ply 10b is located between a lowermost thick wood ply 11n; and a second thick wood ply 11_{n - 1} from the bottom. The thick wood plies 11a to 11n are placed with their fibers extending in the same direction, while the thin wood plies 10a and 10b are placed with their fibers extending perpendicular to the fibers of the thick wood plies 11a to 11n. The wood plies may be bonded together to produce a product which looks as if it is a "solid" product, or a product not produced by connecting plural members together, but consisting of only one material. The thin wood plies 10a and 10b are used to prevent the whole of the wood plies from curving or twisting in the direction perpendicular to the fibers of the thick wood plies. To bond the thick wood plies 11b to 11ₙ₋₁ together, it is necessary that passages (not shown) be provided in at least one of the faces contacting the adjacent faces of wood plies 11b to 11ₙ₋₁. However, as shown in Fig. 11, no passages are provided in the lower surface of the uppermost thick wood ply 11a nor in the upper surface of the thin wood ply 10a. However, the uppermost thick wood ply 11a and the thin wood ply 10 can be bonded to each other when a heating fluid is supplied into passages 82 provided in the upper surface of the thick wood ply 11b. It is because the heating fluid supplied into the passages 82 heats the adhesive material between the uppermost thick wood ply 11a and the thin wood ply 10a through the thin wood ply 10a. Similarly, no passages are provided in the lower surface of the thin wood ply 10b nor in the upper surface of the lowermost thick wood ply 11n. However, the thin wood ply 10b and the lowermost thick wood ply 11n can be bonded to each other when a heating fluid is supplied into passages 82 provided in the lower surface of the second thick wood ply 11ₙ₋₁ from the bottom. Thus, except for a case where only two wood plies are bonded together (as in the embodiment of Fig. 1), the invention does not always require that passages exist in at least one of the contacting faces of adjacent wood plies.

Where passages are provided in each surface of wood plies which will contact the face of another ply (as in Fig. 6), the passages should preferably be so located as to be out of alignment with the passages in the adjacent surface. Such an arrangement contributes toward an effective heating of the adhesive material.

A conventional bonding method may also be used in combination with the bonding method of the invention. For example, no passages may be provided in outer wood plies, but only middle wood plies may have passages. In such a case, pressing plates heated in advance may be used to heat the adhesive materials between the outer wood plies.

Needless to say, it is not necessary to form passages in the uppermost or lowermost surface of wood plies to be bonded. However, if, for example, a product obtained by bonding the wood plies together is to be connected to other material such as mortar, passages may be additionally provided in the uppermost or lowermost surface of the wood plies.

The passages in the wood plies to be bonded may be made at any suitable time. For example, it may be made before drying the wood plies or immediately before bonding the wood plies.

With regard to means for forming the passages, a cutting machine with a cutting blade, a compression molding machine with a projecting member, a combination thereof, or other suitable means may be used.

A cutting blade may be advantageously used to form clearcut passages. Thus, the passages formed thereby allow a heating fluid to flow smoothly and constantly therethrough. Hence, the adhesive material may be heated and hardened uniformly. However, the passages formed by a cutting blade will remain. Accordingly, the larger the vertical cross sections of the passages are, the more the mechanical strength or aesthetic appearance of a product is affected. (However, an adverse effect of the remaining passages may be avoided by applying putty to the passages.)

If a compression molding machine is used to form passages, the above-mentioned drawback may be avoided. That is, a passage formed by compression molding a wood ply at least partly becomes "smaller" or "closed" since the portion of wood ply compressed by the machine at least partly returns gradually to the original position. However, it is important for the passage to remain until a bonding operation has been completed. Therefore, the length of time until bonding will take place, and the moisture content of the wood ply are both important considerations.

With regard to the heating fluid, steam, hot air or a combination thereof may be used as such. The heating fluid may be supplied or blown into a passage from one or both ends. If it is blown from both ends of a passage, it preferably should be blown alternately from one side (i.e., the side of one end of the passage) and the opposite side (i.e., the side of the opposite end thereof).

It is easy to obtain steam with a pressure much higher than the atmospheric pressure and with a high heat value. Such steam will heat and harden an adhesive material more rapidly than hot air. Also, if such steam is used, the passages may be smaller (in their vertical cross sections) and less clear-cut than when hot air is used. Also, experiments have shown that, if part of the moisture resulting from a condensation of the steam is absorbed by the wood plies, the product obtained by bonding the wood plies is not adversely affected for all practical purposes. However, if wood plies are not placed accurately on one another, i.e., if wood plies are not so placed that their edges are vertically aligned, the steam supplied into the passages may "leak" from the wood plies through the portions of the passages that are exposed to the outside. This causes a loss of energy, and also may be a dangerous situation because of the high heat value of the steam. To avoid this, the nonaligned end portions of the wood plies may be cut before the bonding operation to ensure that the wood plies have aligned edges. Alternatively, a hot steam blower 12 of Fig. 12 may be used to prevent a leakage of the steam without cutting the nonaligned edges of the wood plies. In Fig. 12 edges of wood plies 8 located between an upper pressing plate 6a and a lower pressing plate 6d are not vertically aligned with one another. The wood plies 8 are so placed that the fibers thereof extend in the direction in which the wood is conveyed before and after a bonding operation. The wood plies 8 have passages formed along the direction of the fibers. The steam blower 12 comprises a steam pipe 13 and a blowing head 12a connected thereto. The blowing head 12a is large enough to cover the passages of all the wood plies 8. The blowing head 12a includes a sharp-edged wall 12b defining an outlet of the blower through which steam from the pipe 13 is blown. In use, the blower 12 is so moved that the sharp edge of the wall 12b cuts into the wood plies 8 as indicated by a dotted line, and then steam is blown into the passages. Since the blowing head 12a covers the ends of all the passages from which the steam is blown, it is not possible for the steam to leak from the wood plies. The nonaligned edges of the wood plies 8 may be cut after the bonding operation.

With regard to hot air as a heating fluid, it is very difficult to obtain hot air with a pressure which is much higher than the atmospheric pressure. With hot air, a heating rate higher than that of steam cannot be expected. However, the heating rate of hot air is higher than that provided by the previously-mentioned conventional bonding method employing heating plates which also serve as pressing plates. Also, if the hot air leaks from the wood plies, it is a less serious loss of energy than when steam is lost because of the lower heat value of the hot air. For this reason, vertical nonalignment of edges of the wood plies is less critical. However, if hot air is used, the passages must not be blocked by excess adhesive material because hot air is less capable of forcing aside excess adhesive material in a passage than steam. Applying an adhesive material to a surface of a wood ply having no passages will prevent the passages from being blocked by excess adhesive material. Also, blowing steam into the passages under high pressure or pressurized air with a normal temperature and a high pressure will remove excess adhesive material from the passages.

If the steam blower 12 of Fig. 12 is adapted to be moved both in a direction of conveyance of wood plies and in the opposite direction, the blower 12 may be used for the bonding operation of Fig. 7. In addition, the blower 12 may be modified for use as a hot air blower.

The bonding method of the invention can be used to bond not only wood plies, but also wood materials with the same dimensions in thickness (depth) and width or with the same dimensions in thickness, width and length.

In addition, the bonding method of the invention can also be used to bond a wood material and other material than wood.

A method for bonding wood plies together comprises the steps of (i) forming passages in at least one of faces of the wood plies, except faces thereof for providing opposed faces of a bonded wood product, (ii) placing the wood plies on one another with a thermosetting adhesive material or materials between, and (iii) pressing the wood plies together transverse to the opposed faces of the wood plies, while blowing a heating fluid into the passages to heat and harden the adhesive material or materials. The passages should preferably be evenly distributed on the face of the wood ply to uniformly heat and harden the adhesive material. According to one embodiment of the invention, the passages extend from one edge of the wood ply to an opposed edge thereof. Steam or hot air may be used as the heating fluid.

## Claims

1. A method for bonding wood plies (1a, 1b; 3a, 3b, 3c, 3d, 3e; 5a, 5b, 5c, 5d, 5e; 7; 8; 9A, 9B; 10a, 10b) together, comprising the steps of
forming passages (2; 22; 32; 42; 52, 62, 72; 82) in at least one face of at least one of all wood plies (1a, 1b; 3a, 3b, 3c, 3d, 3e; 5a, 5b, 5c, 5d, 5e; 7; 8; 9A, 9B; 10a, 10b) to be bonded together, said one face forming an interface with another one of said wood plies (1a, 1b; 3a, 3b, 3c, 3d, 3e; 5a, 5b, 5c, 5d, 5e; 7; 8; 9A, 9B; 10a, 10b) when the wood plies (1a, 1b; 3a, 3b, 3c, 3d, 3e; 5a, 5b, 5c, 5d, 5e; 7; 8; 9A, 9B; 10a, 10b) are bonded together, each of said passages (2; 22; 32; 42; 52, 62, 72; 82) extending continuously from a first edge of the wood ply (1a, 1b; 3a, 3b, 3c, 3d, 3e; 5a, 5b, 5c, 5d, 5e; 7; 8; 9A, 9B; 10a, 10b) to a second edge thereof,
placing said wood plies (1a, 1b; 3a, 3b, 3c, 3d, 3e; 5a, 5b, 5c, 5d, 5e; 7; 8; 9A, 9B; 10a, 10b) in face to face abutment with a thermosetting adhesive material therebetween,
heating and setting said adhesive material by a heating fluid being in said passages (2; 22; 32; 42; 52, 62, 72; 82), while pressing said wood plies (1a, 1b; 3a, 3b, 3c, 3d, 3e; 5a, 5b, 5c, 5d, 5e; 7; 8; 9A, 9B; 10a, 10b) together in a direction perpendicular to the interfaces between said wood plies (1a, 1b; 3a, 3b, 3c, 3d, 3e; 5a, 5b, 5c, 5d, 5e; 7; 8; 9A, 9B; 10a, 10b),
**characterized in that**
either hot air or hot vapor as said heating fluid is blown through said passages (2; 22; 32; 42; 52, 62, 72; 82) from a side of said passages (2; 22; 32; 42; 52, 62, 72; 82), so that said heating fluid flows constantly therethrough.

2. A method for bonding wood plies according to claim 1,
**characterized in that**
said passages (2; 22; 32; 42, 52; 62, 72; 82) extend from a first edge of said wood ply (1a, 1b; 3a, 3b, 3c, 3d, 3e; 5a, 5b, 5c, 5d, 5e; 7; 8; 9A, 9B; 10a, 10b) to an opposed second edge.

3. A method for bonding wood plies according to claim 1,
**characterized in that**
a first group (42) of said passages (2; 22; 32; 42, 52; 62, 72; 82) extends from a first edge of said wood ply (9A) to an opposed second edge, while a second group (52) of said passages (2; 22; 32; 42; 52, 62, 72; 82) extends, in meandering lines, from a third edge of the wood ply (9A) to a fourth edge thereof opposed to the third edge.

4. A method for bonding wood plies according to claim 1,
**characterized in that**
a first group (62) of said passages (2; 22; 32; 42, 52; 62, 72; 82) extends from one edge of said wood ply (9B) to an opposed edge thereof, while a second group (72) of said passages (2; 22; 32; 42, 52; 62, 72; 82) extends diagonally across the first group of said passages (2; 22; 32; 42, 52; 62, 72; 82).

5. A method for bonding wood plies according to any of the preceding claims,
**characterized in that**
said heating fluid is selected from a group consisting of hot vapour and hot air.

## Patentansprüche

1. Verfahren zum Zusammenleimen von Holzschichten (1a, 1b; 3a, 3b, 3c, 3d, 3e; 5a, 5b, 5c, 5d, 5e; 7; 8; 9A, 9B; 10a, 10b), mit den folgenden Schritten:
Bildung von Leitungen (2; 22; 32; 42; 52, 62, 72; 82) in zumindest einer Fläche von zumindest einer aller Holzschichten (1a, 1b; 3a, 3b, 3c, 3d, 3e; 5a, 5b, 5c, 5d, 5e; 7; 8; 9A, 9B; 10a, 10b), um zusammengeleimt zu werden, wobei jene eine Fläche eine Zwischenfläche mit einer anderen der Holzschichten (1a, 1b; 3a, 3b, 3c, 3d, 3e; 5a, 5b, 5c, 5d, 5e; 7; 8; 9A, 9B; 10a, 10b) bildet, wenn die Holzschichten (1a, 1b; 3a, 3b, 3c, 3d, 3e; 5a, 5b, 5c, 5d, 5e; 7; 8; 9A, 9B; 10a, 10b) zusammengeleimt sind, wobei sich jede der Leitungen (2; 22; 32; 42; 52; 62, 72; 82) fortlaufend von einer ersten Kante der Holzschicht (1a, 1b; 3a, 3b, 3c, 3d, 3e; 5a, 5b, 5c, 5d, 5e; 7; 8; 9A, 9B; 10a, 10b) zu deren zweiten Kante erstrecken,
Anordnen der Holzschichten (1a, 1b; 3a, 3b, 3c, 3d, 3e; 5a, 5b, 5c, 5d, 5e; 7; 8; 9A, 9B; 10a, 10b) in Fläche-zu-Fläche-Anlage mit einem dazwischenliegenden wärmehärtenden Material,
Heizen und Fixieren des Haftmaterials mittels eines in den Leitungen (2; 22; 32; 42; 52, 62, 72; 82) befindlichen Heizfluids, während die Holzschichten (1a, 1b; 3a, 3b, 3c, 3d, 3e; 5a, 5b, 5c, 5d, 5e; 7; 8; 9A, 9B; 10a, 10b) in zu den Zwischenflächen zwischen den ie Holzschichten (1a, 1b; 3a, 3b, 3c, 3d, 3e; 5a, 5b, 5c, 5d, 5e; 7; 8; 9A, 9B; 10a, 10b) senkrechter Richtung zusammengepresst werden,
**dadurch gekennzeichnet, daß**
als das Heizfluid entweder Heißluft oder Heißdampf von einer Seite der Leitungen (2; 22; 32; 42; 52, 62, 72; 82) durch die Leitungen (2; 22; 32; 42; 52, 62, 72; 82) geblasen wird, so daß das Heizfluid gleichmäßig durchströmt.

2. Verfahren zum Leimen der Holzschichten nach Anspruch 1,
**dadurch gekennzeichnet, daß**
sich die Leitungen (2; 22; 32; 42; 52, 62, 72; 82) von einer ersten Kante der Holzschicht (1a, 1b; 3a, 3b, 3c, 3d, 3e; 5a, 5b, 5c, 5d, 5e; 7; 8; 9A, 9B; 10a, 10b) zu einer gegenüberliegenden zweiten Kante erstrecken.

3. Verfahren zum Leimen von Holzschichten nach Anspruch 1,
**dadurch gekennzeichnet, daß**
sich eine erste Gruppe (42) der Leitungen (2; 22; 32; 42, 52; 62, 72; 82) von einer ersten Kante der Holzschicht (9A) zu einer gegenüberliegenden zweiten Kante erstreckt, während sich eine zweite Gruppe (52) der Leitungen (2; 22; 32; 42, 52; 62, 72; 82) in mäanderförmigen Linien von einer dritten Kante der Holzschicht (9A) zu ihrer vierten, der dritten Kante gegenüberliegenden Kante erstreckt.

4. Verfahren zum Leimen der Holzschichten nach Anspruch 1,
**dadurch gekennzeichnet, daß**
sich eine erste Gruppe (62) der Leitungen (2; 22; 32; 42; 52; 62, 72; 82) von einer Kante der Holzschicht (9B) zu ihrer gegenüberliegenden Kante erstreckt, während sich eine zweite Gruppe (72) der Leitungen (2; 22; 32; 42; 52; 62, 72; 82) diagonal über die erste Gruppe der Leitungen (2; 22; 32; 42, 52; 62, 72; 82) erstreckt.

5. Verfahren zum Leimen von Holzschichten nach einem der vorhergehenden Ansprüche,
**dadurch gekennzeichnet, daß**
das Heizfluid aus einer aus Heißdampf und Heißluft bestehenden Gruppe ausgewählt ist.

## Revendications

1. Procédé de collage de couches de bois (1a, 1b; 3a, 3b, 3c, 3d, 3e; 5a, 5b, 5c, 5d, 5e; 7; 8; 9A, 9B; 10a, 10b) entre elles, comprenant les étapes de
formation de passages (2; 22; 32; 42; 52, 62, 72; 82) dans au moins une face d'au moins l'une parmi toute les couches de bois (1a, 1b; 3a, 3b, 3c, 3d, 3e; 5a, 5b, 5c, 5d, 5e; 7; 8; 9A, 9B; 10a, 10b) devant être collées ensemble, ladite première face formant une interface avec une autre parmi lesdites couches de bois (1a, 1b; 3a, 3b, 3c, 3d, 3e; 5a, 5b, 5c, 5d, 5e; 7; 8; 9A, 9B; 10a, 10b) lorsque les couches de bois (1a, 1b; 3a, 3b, 3c, 3d, 3e; 5a, 5b, 5c, 5d, 5e; 7; 8; 9A, 9B; 10a, 10b) sont collées ensemble, chacun desdits passages (2; 22; 32; 42; 52, 62, 72; 82) s'étendant de manière continue depuis un premier bord de la couche de bois ((1a, 1b; 3a, 3b, 3c, 3d, 3e; 5a, 5b, 5c, 5d, 5e; 7; 8; 9A, 9B; 10a, 10b) vers un deuxième bord de cette dernière,
mise en place desdites couches de bois (1a, 1b; 3a, 3b, 3c, 3d, 3e; 5a, 5b, 5c, 5d, 5e; 7; 8; 9A, 9B; 10a, 10b) en butée face à face avec un matériau adhésif thermodurcissable entre elles,
chauffage et prise dudit matériau adhésif par un fluide de chauffage se trouvant dans lesdits passages (2; 22; 32; 42; 52, 62, 72; 82), tout en pressant lesdites couches de bois (1a, 1b; 3a, 3b, 3c, 3d, 3e; 5a, 5b, 5c, 5d, 5e; 7; 8; 9A, 9B; 10a, 10b) ensemble dans une direction perpendiculaire aux interfaces situées entre lesdites couches de bois (1a, 1b; 3a, 3b, 3c, 3d, 3e; 5a, 5b, 5c, 5d, 5e; 7; 8; 9A, 9B; 10a, 10b),
caractérisé en ce que
de l'air chaud ou de la vapeur chaude utilisé à titre dudit fluide de chauffage est soufflé dans lesdits passages (2; 22; 32; 42; 52, 62, 72; 82) depuis un côté desdits passages (2; 22; 32; 42; 52, 62, 72; 82), de manière que ledit fluide de chauffage s'y écoule de manière constante.

2. Procédé de collage de couches de bois selon la revendication 1, caractérisé en ce que lesdits passages (2; 22; 32; 42, 52; 62, 72; 82) s'étendent depuis un premier bord de ladite couche de bois (1a, 1b; 3a, 3b, 3c, 3d, 3e; 5a, 5b, 5c, 5d, 5e; 7; 8; 9A, 9B; 10a, 10b) vers un deuxième bord opposé.

3. Procédé de collage de couches de bois selon la revendication 1, caractérisé en ce qu'un premier groupe (42) desdits passages (2; 22; 32; 42, 52; 62, 72; 82) s'étend depuis un premier bord de ladite couche de bois (9A) vers un deuxième bord opposé, tandis qu'un deuxième bord (52) desdits passages (2; 22; 32; 42; 52, 62, 72; 82) s'étend, suivant des lignes serpentées, depuis un troisième bord de la couche de bois (9A) vers un quatrième bord de cette dernière, opposé au troisième bord.

4. Procédé de collage de couches de bois selon la revendication 1, caractérisé en ce qu'un premier groupe (62) parmi lesdits passages (2; 22; 32; 42, 52; 62, 72; 82) s'étend depuis un bord de ladite couche de bois (9B) vers un bord opposé de cette dernière, tandis qu'un deuxième groupe (72) parmi lesdits passages (2; 22; 32; 42, 52; 62, 72; 82) s'étend transversalement sur le premier groupe desdits passages (2; 22; 32; 42, 52; 62, 72; 82).

5. Procédé de collage de couches de bois selon l'une quelconque des revendications précédentes, caractérisé en ce que ledit fluide de chauffage est sélectionné dans un groupe comprenant la vapeur chaude et l'air chaud.
